# EUROPEAN PATENT SPECIFICATION

(11) **EP 2 087 182 B1**
(45) Date of publication and mention of the grant of the patent: **29.07.2015**
(21) Application number: 07824407.6
(22) Date of filing: 01.11.2007
(51) Int. Cl.: E04B 1/78, F16L 59/02

(54) **THERMAL INSULATION QUILT**
WÄRMEISOLIERUNGSDECKE
NATTE D'ISOLATION THERMIQUE

(30) Priority: 21.11.2006 GB 0623195
(43) Date of publication of application: 12.08.2009
(73) Proprietor: Yorkshire Building Services (Whitwell) Ltd, Creswell Derbyshire S80 4AJ (GB)
(72) Inventor: WOODHALL, Christopher, Creswell Derbyshire S80 4AJ (GB)
(74) Representative: Lock, Howard John
(86) International application number: PCT/GB2007/004166
(87) International publication number: WO 2008/062155

(56) References cited:
- EP-A- 1 645 793
- GB-A- 482 809
- US-A- 5 897 935
- AVERY DENISSON: "Swiftach Systems" 22 May 2007 (2007-05-22), , XP002467169 the whole document

## Description

### Field of the Invention

This invention relates to the use of a thermal insulation quilt in the building industry for the lining of roofs, walls etc either as a new build installation, or as part of property renovation or improvement.

### Background of the Invention

Thermal insulation quilts are known comprising a multi-layered materials having differing thermal insulation or reflective properties. One known membrane comprises multiple layers of polyester fibre, metallised polyester, extruded polyethylene, and aluminium foil, the number of layers usually being determined to meet the various thermal insulation standards for the particular installation involved. In practice, the multiple layers have been secured together by stitching and although efficient this results in the disadvantageous compression of the various insulating layers and resultant loss of thermal insulation, such that cold "spots" are created along the line of stitching, along which line the intended thermal insulation properties may not be achieved.

GB 482 809 A discloses a heat and sound insulating body of spun glass, and the use of a multi-layer insulation quilt according to the preamble of claim 1.

### Object of the Invention

A basic object of the invention is to provide an improved multi-layer quilt.

### Summary of the Invention

According to the present invention there is provided the use of a multi-layer, thermal insulation quilt as insulation in the wall or roof of a building, wherein the multi-layer, thermal insulation quilt comprises two spaced apart, outer layers at least one of which is a reflective thermal insulation layer, between which outer layers there is provided at least one inner layer of thermal insulation, characterised in that the outer layers are secured together by an array of non-metallic restraining tags of such length that the tags determine the maximum separation of the outer layers but effect no compressive loading on the or each thermal insulation layer.

### Advantages of the Invention

With the avoidance of stitching and the securing by the tags, the linear cold spots of prior art multi-layer quilts are avoided, as the securing technique in accordance with the invention results in no compression of the e.g. fibrous inner layer.

After installation the tags can, if required, be removed (for example by cutting), thereby allowing the inner layer(s) to bag out further - either naturally, following slight compression by the tags, and/or under gravity, trapping more air and provide greater thermal insulation properties.

### Preferred or Optional Features

Both outer layers are of reflective thermal insulation.

The or each outer layer of reflective thermal insulation is a foil.

The or each outer layer of reflective thermal insulation is aluminium foil.

The or each outer layer of reflective thermal insulation is metallic polyester foil.

The outer surface of the aluminium foil is provided with a coating to prevent, or reduce, oxidation.

The coating is of nitrocellulose.

The or each outer, aluminium foil layers is/are reinforced by a grid of fiberglass fibres.

The thermal insulation layer(s) is/are compressible.

The thermal insulation layer(s) is/are fibrous.

The quilt comprises multiple fibrous insulation layers, at least some of which are separated by metallised layers and/or extruded polyethylene foil layers.

The quilt comprises six fibrous insulation layers and five separating layers.

The separating layers, being enclosed within the quilt, and hence not subjected to abrasion etc during transportation, handling and installation, are of a non-reinforced kind.

The tags are of nylon.

The tags are of monofilament nylon.

The tags are of cotton.

Each tag comprises an abutment, an enlargement, or a head at each end adapted to engage the external surface of the adjacent outer layer.

The abutment etc is an orthogonal bar of T-like form.

The abutment etc, at least at one end of the tag, is circular etc to provide an enlarged abutment surface.

The tags are of a contrasting colour compared with the outer layers, such that the location of each tag is readily identifiable should it be required to release or remove the tags e.g. by cutting the tag with scissors after installation, to permit expansion or bagging of the quilt, which provides further improved thermal insulation properties.

The quilt is such that, after manufacture, it can be rolled up for ease of transportation and storage.

The tags are installed at suitable longitudinal and transverse spacing such that when a say 1.5m wide quilt is cut to size or fit, a sufficient number of tags remain in place to maintain the integrity of the quilt along suitable connection lines whether straight or zig-zag.

The connection lines are at least adjacent peripheral edges of the quilt.

A specific example of quilt used in accordance with the invention comprises 15 layers, being:-
1. foil insulation - shiny side facing out;
2. polyester wadding;
3. metallised polyester;
4. extruded polyethylene;
5. extruded polyethylene;
6. metallised polyester;
7. polyester wadding;
8. metallised polyester;
9. polyester wadding;
10. metallised polyester;
11. extruded polyethylene;
12. extruded polyethylene;
13. metallised polyester;
14. polyester wadding;
15.foil insulation - shiny side facing out.

### Drawings

One example of a multi-layer membrane is shown in the accompanying diagrammatic drawings, in which:-
Figure 1 is a section through a portion of a quilt where a tag is located; Figure 2 details the tag of Figure 1;
Figure 3 is a view of a portion of quilt showing an array of tags; and

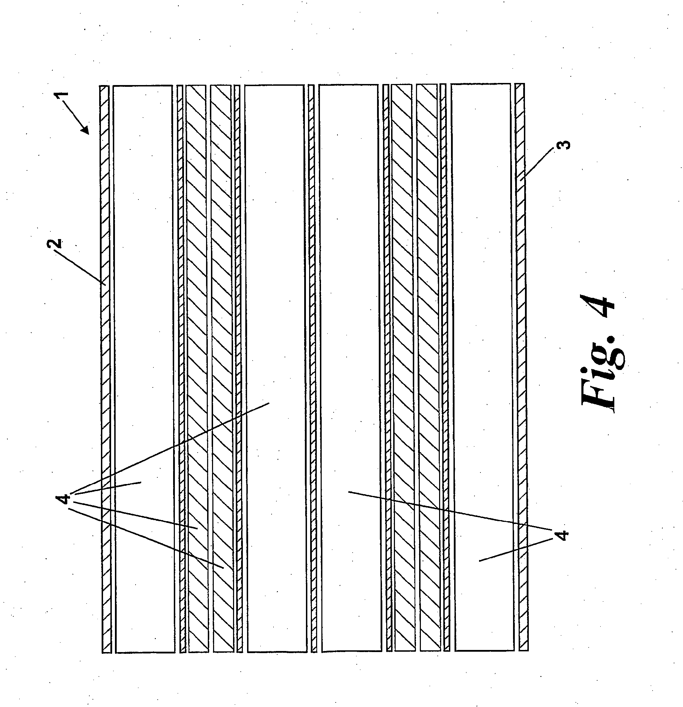

Figure 4 details a 15 layer quilt which is exploded to illustrate the various layers.

In the drawings, a multi-layer thermal insulation quilt 1 comprises two spaced-apart, outer layers 2, 3 at least one of which is aluminium foil with the shiny side of the foil facing outwardly and provided with a protective coating (as known in the industry). Between the outer layers 2, 3 are multiple inner layers 4 of thermal insulation such as polyester wadding, separated by layers 11 of metallised polyester, and layers 12 of extruded polyethylene.

The outer layers 2, 3 are secured together by an array of retaining tags 5 of nylon having an enlarged head or abutment 6, 7 at each opposite end, and a relatively thin connecting strand 8.

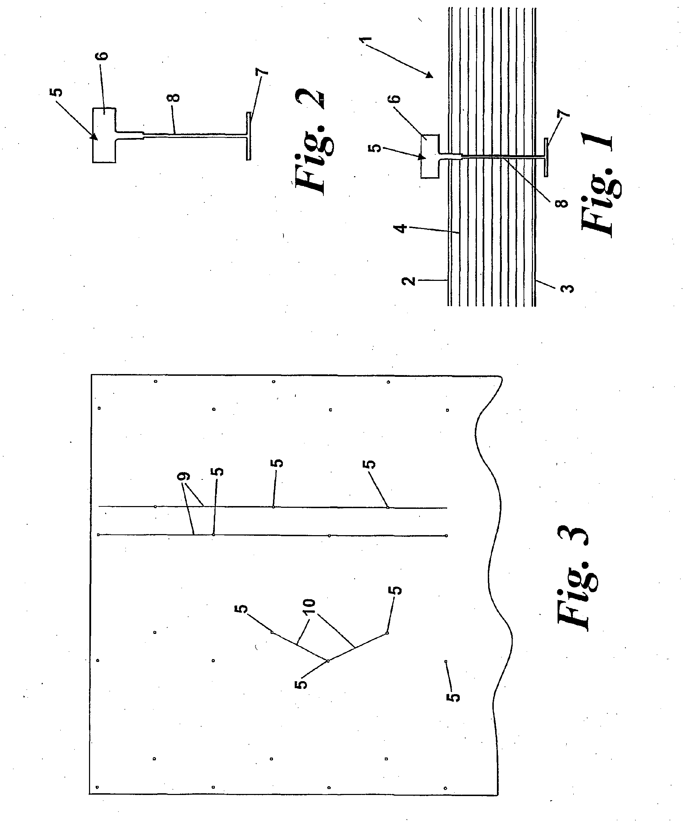

Figure 2 details the so-called "Kimble" tag(s) 5 of Figure 1, which tag(s) 5 is a proprietary item used for instance in the clothing industry and insertable by a gun.

Figure 3 is a plan view of quilt 1 showing how the tags 5 may be inserted in straight lines 9, or in zig-zag lines 10 along the quilt 1, with the lines being at selected spacings e.g. 450mm apart. Clearly other patterns of tag insertion may be employed, if considered desirable.

## Claims

1. The use of a multi-layer, thermal insulation quilt (1) as insulation in the wall or roof of a building, wherein the multi-layer, thermal insulation quilt comprises two spaced apart, outer layers (2, 3) at least one of which is a reflective thermal insulation layer, between which outer layers there is provided at least one inner layer (4) of thermal insulation, **characterised in that** the outer layers (2, 3) are secured together by an array of non-metallic restraining tags (5) of such length that the tags (5) determine the maximum separation of the outer layers (2, 3) but effect no compressive loading on the or each thermal insulation layer (4).

2. The use of a quilt as claimed in Claim 1, **characterised in that** both outer layers (2,3) are of reflective thermal insulation.

3. The use of a quilt as claimed in Claim 1 or Claim 2, **characterised in that** the, or each, outer layer (2, 3) of reflective thermal insulation is a foil.

4. The use of a quilt as claimed in any preceding claim, **characterised in that** the, or each, outer layer (2, 3) of reflective thermal insulation is aluminium foil or metallic polyester foil.

5. The use of a quilt as claimed in Claim 4, **characterised in that** the aluminium foil has an outer surface which is provided with a coating, for example of nitrocellulose, to prevent, or reduce, oxidation.

6. The use of a quilt as claimed in Claim 4, **characterised in that** the, or each, outer aluminium foil layer (2, 3) is reinforced by a grid of fibreglass fibres.

7. The use of a quilt as claimed in any preceding claim, **characterised in that** the, or each, thermal insulation layer (4) is compressible and/or fibrous.

8. The use of a quilt as claimed in any preceding claim, **characterised in that** the quilt comprises multiple fibrous insulation layers (4), at least some of which are separated by metallised layers (11) and/or extruded polyethylene layers (12).

9. The use of a quilt as claimed in any preceding claim, **characterised in that** the quilt comprises six fibrous insulation layers (4) and five separating layers (11 ,12), and the separating layers (11,12), being enclosed within the quilt (1), are, for example, of a non-reinforced kind.

10. The use of a quilt as claimed in any preceding claim, **characterised in that** the tags (5) are of cotton or nylon, for example monofilament nylon.

11. The use of a quilt as claimed in any preceding claim, **characterised in that** each tag (5) comprises an abutment, an enlargement, or a head (6, 7) at each end adapted to engage the external surface of the adjacent outer layer (2, 3).

12. The use of a quilt as claimed in Claim 11, **characterised in that** each abutment etc (6, 7) is an orthogonal bar of T-like form or is circular etc to provide an enlarged abutment surface.

13. The use of a quilt as claimed in any preceding claim, **characterised in that** the tags (5) are of a contrasting colour compared with the outer layers (2,3), such that the location of each tag (5) is readily identifiable should it be required to release or remove the tags.

14. The use of a quilt as claimed in any preceding claim, **characterised in that** the tags (5) are installed at suitable longitudinal and transverse spacing such that when the quilt is cut to size or fit, a sufficient number of tags (5) remain in place to maintain the integrity of the quilt (1) along suitable connection lines whether straight or zig-zag, the connection lines being, for example, at least adjacent peripheral edges of the quilt (1).

15. The use of a quilt as claimed in any preceding claim, the quilt comprising 15 layers, being:-
1. foil insulation (2) - shiny side facing out;
2. polyester wadding (4);
3. metallised polyester (11);
4. extruded polyethylene (12);
5. extruded polyethylene (12);
6. metallised polyester (11);
7. polyester wadding (4);
8. metallised polyester (11);
9. polyester wadding (4);
10. metallised polyester (11);
11. extruded polyethylene (12);
12. extruded polyethylene (12);
13. metallised polyester (11);
14. polyester wadding (4);
15. foil insulation (3) - shiny side facing out.

## Patentansprüche

1. Verwendung einer mehrschichtigen Wärmeisolierungsdecke (1) als Isolierung in den Wänden oder dem Dach von Gebäuden, wobei die mehrschichtige Wärmeisolierungsdecke zwei voneinander getrennte Außenschichten (2, 3) umfasst und mindestens eine dieser Schichten eine reflektierende Wärmeschutzschicht ist, und zwischen den Außenschichten mindestens eine Innenschicht (4) aus Wärmedämmmaterial ist, **dadurch gekennzeichnet, dass** die Außenschichten (2, 3) von mehreren nicht-metallischen Halteklammern (5) zusammengehalten werden, die ausreichend lang sind, dass die Klammern (5) eine maximale Trennung der Außenschichten (2, 3) gewährleisten, ohne dabei die Wärmeschutzschichten (4) zusammenzudrücken.

2. Verwendung einer Decke gemäß Anspruch 1, **dadurch gekennzeichnet, dass** beide Außenschichten (2, 3) aus reflektierendem Wärmeschutzmaterial bestehen.

3. Verwendung einer Decke gemäß Anspruch 1 und Anspruch 2, **dadurch gekennzeichnet, dass** die oder jede aus reflektierendem Wärmeschutzmaterial bestehende Außenschicht (2, 3) eine Folie ist.

4. Verwendung einer Decke gemäß allen vorangegangenen Ansprüchen, **dadurch gekennzeichnet, dass** eine oder jede aus reflektierendem Wärmeschutzmaterial bestehende Außenschicht (2, 3) eine Aluminiumfolie oder eine metallische Polyesterfolie ist.

5. Verwendung einer Decke gemäß Anspruch 4, **dadurch gekennzeichnet, dass** die Aluminiumfolie eine Außenseite hat, die beschichtet ist, zum Beispiel mit Nitrozellulose, um ein Oxidieren zu vermeiden oder zu vermindern.

6. Verwendung einer Decke gemäß Anspruch 4, **dadurch gekennzeichnet, dass** eine oder jede Außenschicht aus Aluminiumfolie (2, 3) mit einem Faserglasgitter verstärkt ist.

7. Verwendung einer Decke gemäß allen vorangegangenen Ansprüchen, **dadurch gekennzeichnet, dass** eine oder jede Wärmeschutzschicht (4) zusammendrückbar und/oder faserig ist.

8. Verwendung einer Decke gemäß allen vorangegangenen Ansprüchen, **dadurch gekennzeichnet, dass** die Decke aus mehreren faserigen Dämmschichten (4) besteht, von denen zumindest einige durch metallisierte Schichten (11) und/oder extrudierte Schichten aus Polyethylen (12) voneinander getrennt sind.

9. Verwendung einer Decke gemäß allen vorangegangenen Ansprüchen, **dadurch gekennzeichnet, dass** die Decke aus sechs faserigen Dämmschichten (4) und fünf Trennschichten (11, 12) besteht, wobei die in der Decke (1) eingeschlossenen Trennschichten (11, 12) zum Beispiel nicht verstärkt sind.

10. Verwendung einer Decke gemäß allen vorangegangenen Ansprüchen, **dadurch gekennzeichnet, dass** die Klammern (5) aus Baumwolle oder Nylon, zum Beispiel monofiles Nylon, sind.

11. Verwendung einer Decke gemäß allen vorangegangenen Ansprüchen, **dadurch gekennzeichnet, dass** jede Klammer (5) aus einem Widerlager, einer Erweiterung oder einem Kopf (6, 7) an beiden Enden besteht, der so angepasst ist, dass die Außenseite der angrenzenden Außenschicht (2, 3) erfasst wird.

12. Verwendung einer Decke gemäß Anspruch 11, **dadurch gekennzeichnet, dass** das Widerlager (6, 7) etc. ein rechtwinkliger Steg in T-Form oder rund ist etc., damit eine vergrößerte Widerlagerfläche zur Verfügung steht.

13. Verwendung einer Decke gemäß allen vorangegangenen Ansprüchen, **dadurch gekennzeichnet, dass** die Klammern (5) eine andere Farbe als die Außenschichten (2, 3) haben, so dass jede Klammer (5) auf Anhieb erkennbar ist, falls die Klammern gelöst oder entfernt werden müssen.

14. Verwendung einer Decke gemäß allen vorangegangenen Ansprüchen, **dadurch gekennzeichnet, dass** die Klammern (5) in geeigneten Längs- und Querabständen angebracht werden, damit nach dem Zuschneiden oder Anpassen der Decke eine ausreichende Anzahl an Klammern (5) übrig bleibt, die die Decke (1) entlang von geeigneten Verbindungslinien, egal ob gerade oder zickzack, zusammenhalten, wobei die Verbindungslinien zumindest angrenzende Außenkanten der Decke (1) sind.

15. Verwendung einer Decke gemäß allen vorangegangenen Ansprüchen, **dadurch gekennzeichnet, dass** die Decke folgende 15 Schichten umfasst:
1. Foliendämmschicht (2) - glänzende Seite nach Außen;
2. Polyesterwattierung (4);
3. metallisiertes Polyester (11);
4. extrudiertes Polyethylen (12);
5. extrudiertes Polyethylen (12);
6. metallisiertes Polyester (11);
7. Polyesterwattierung (4);
8. metallisiertes Polyester (11);
9. Polyesterwattierung (4);
10. metallisiertes Polyester (11);
11. extrudiertes Polyethylen (12);
12. extrudiertes Polyethylen (12);
13. metallisiertes Polyester (11);
14. Polyesterwattierung (4);
15. Foliendämmschicht (3) - glänzende Seite nach Außen.

## Revendications

1. L'emploi d'un matelas d'isolation thermique multicouches (1) pour l'isolation des parois ou du toit d'un bâtiment, le matelas d'isolation thermique multicouches comprenant deux couches externes (2, 3) espacées l'une de l'autre, au moins une desquelles est une couche d'isolation thermique réfléchissante, entre lesquelles est intercalée au moins une couche interne (4) d'isolation thermique, **caractérisée par le fait que** les couches externes (2, 3) sont fixées ensemble par un réseau de plaquettes de retenue non métalliques (5), dont la longueur est telle que les plaquettes (5) déterminent l'écart maximum des couches externes (2, 3) sans toutefois appliquer de charge de compression sur la ou chaque couche d'isolation thermique (4).

2. L'emploi d'un matelas selon la revendication 1, **caractérisé par le fait que** les deux couches externes (2, 3) présentent une isolation thermique réfléchissante.

3. L'emploi d'un matelas selon la revendication 1 ou la revendication 2, **caractérisé par le fait que** la ou chaque couche externe (2, 3) d'isolation thermique réfléchissante est une feuille métallisée.

4. L'emploi d'un matelas selon une quelconque des revendications précédentes, **caractérisé par le fait que** la ou chaque couche externe (2, 3) d'isolation thermique réfléchissante est une feuille d'aluminium ou une feuille de polyester métallique.

5. L'emploi d'un matelas selon la revendication 4, **caractérisé par le fait que** la feuille d'aluminium possède une surface extérieure dotée d'un revêtement, par exemple de la nitrocellulose, pour la prévention, ou la réduction, de l'oxydation.

6. L'emploi d'un matelas selon la revendication 4, **caractérisé par le fait que** la ou chaque couche externe en feuille d'aluminium (2, 3) est renforcée par un réseau de fibres de verre.

7. L'emploi d'un matelas selon une quelconque des revendications précédentes, **caractérisé par le fait que** la ou chaque couche d'isolation thermique (4) est compressible et/ou fibreuse.

8. L'emploi d'un matelas selon une quelconque des revendications précédentes, **caractérisé par le fait que** le matelas comprend de multiples couches d'isolation thermique (4) au moins certaines desquelles sont séparées par des couches métallisées (11) et/ou des couches de feuilles de polyéthylène extrudé (12).

9. L'emploi d'un matelas selon une quelconque des revendications précédentes, **caractérisé par le fait que** le matelas comprend six couches d'isolation fibreuse (4) et cinq couches de séparation (11, 12), les couches de séparation (11, 12) étant incorporées dans le matelas (1) sont, par exemple, d'un type non renforcé.

10. L'emploi d'un matelas selon une quelconque des revendications précédentes, **caractérisé par le fait que** les plaquettes (5) sont, par exemple, en nylon mono-filament.

11. L'emploi d'un matelas selon une quelconque des revendications précédentes, **caractérisé par le fait que** chaque plaquette (5) comprend une butée, une partie élargie, ou une tête (6, 7) à chaque bout, adaptée pour engager la surface externe de la couche externe adjacente (2, 3).

12. L'emploi d'un matelas selon la revendication 11, **caractérisé par le fait que** chaque butée etc. (6, 7) est une barre orthogonale en forme de T, ou est circulaire etc. de façon à constituer une surface de butée élargie.

13. L'emploi d'un matelas selon une quelconque des revendications précédentes, **caractérisé par le fait que** les plaquettes (5) sont de couleur contrastante avec celle des couches externes (2, 3), afin de faciliter l'identification de l'emplacement de chaque plaquette (5) au cas où il soit nécessaire de les détacher ou de les enlever.

14. L'emploi d'un matelas selon une quelconque des revendications précédentes, **caractérisé par le fait que** les plaquettes (5) sont espacées de façon appropriée dans les sens longitudinal et transversal, de sorte que dans l'éventualité de la coupe du matelas aux dimensions spécifiées ou nécessaires, un nombre suffisant de plaquettes (5) reste en place de façon à maintenir l'intégrité du matelas (1) le long de lignes de raccordement, droites ou en zigzag, les lignes de raccordement étant, par exemple, au moins adjacentes aux bords sur le pourtour du matelas (1).

15. L'emploi d'un matelas selon une quelconque des revendications précédentes, le matelas comprenant les 15 couches suivantes :
1. isolation en feuille métallique (2) - face luisante à l'extérieur ;
2. rembourrage en polyester (4) ;
3. polyester métallisé (11) ;
4. polyéthylène extrudé (12) ;
5. polyéthylène extrudé (12) ;
6. polyester métallisé (11) ;
7. rembourrage en polyester (4) ;
8. polyester métallisé (11) ;
9. rembourrage en polyester (4) ;
10. polyester métallisé (11) ;
11. polyéthylène extrudé (12) ;
12. polyéthylène extrudé (12) ;
13. polyester métallisé (11) ;
14. rembourrage en polyester (4) ;
15. isolation en feuille métallique (3) - face luisante à l'extérieur ;
